# EUROPÄISCHE PATENTSCHRIFT

(11) **EP 2 029 316 B1**
(45) Veröffentlichungstag und Bekanntmachung des Hinweises auf die Patenterteilung: **14.09.2011**
(21) Anmeldenummer: 06753871.0
(22) Anmeldetag: 24.05.2006
(51) Int. Cl.: B23K 37/04, B23Q 1/03, B23K 7/00

(54) **VERFAHREN, EINSTELLVORRICHTUNG UND AUFLAGEELEMENT ZUM EINRICHTEN EINER WERKSTÜCKAUFLAGE ZUR AUFNAHME EINES TAFELFÖRMIGEN WERKSTÜCKS**
METHOD, ADJUSTING METHOD AND SUPPORTING ELEMENT FOR SETTING UP A WORKPIECE SUPPORT FOR RECEIVING A PLATE-LIKE WORKPIECE
PROCÉDÉ, DISPOSITIF DE RÉGLAGE ET ÉLÉMENT DE SUPPORT POUR RÉGLER UN PORTE-PIÈCE DESTINÉ À RECEVOIR UNE PIÈCE EN FORME DE PLAQUE

(43) Veröffentlichungstag der Anmeldung: 04.03.2009
(73) Patentinhaber: TRUMPF Werkzeugmaschinen GmbH + Co. KG, 71254 Ditzingen (DE)
(72) Erfinder: HÄCKER, Michael, 71299 Wimsheim (DE)
(74) Vertreter: Maser, Jochen
(86) Internationale Anmeldenummer: PCT/EP2006/005002
(87) Internationale Veröffentlichungsnummer: WO 2007/134630

(56) Entgegenhaltungen:
- EP-A- 1 731 256
- DE-A1- 3 803 918
- JP-A- 8 132 228
- JP-A- 10 263 874
- JP-A- 62 003 892

## Beschreibung

Die Erfindung betrifft ein Verfahren, eine Einstellvorrichtung und ein Auflageelement zum Einrichten einer Werkstückauflage zur Aufnahme eines insbesondere tafelförmigen Werkstücks in einer Bearbeitungsanlage, in der das Werkstück mit einem Schneidstrahl bearbeitet wird.

Zur Bearbeitung von tafelförmigen Werkstücken in Bearbeitungsanlagen, insbesondere Laserbearbeitungsanlagen, ist eine Werkstückauflage vorgesehen, die einen Rahmen mit mehreren, vorzugsweise parallel zueinander angeordneten Auflageelementen aufweist, auf denen das zu bearbearbeitende Werkstück aufliegt. Die Auflageelemente weisen zumeist in regelmäßigen Abständen Tragpunktspitzen auf und bilden ein Auflagefeld für das oder die Werkstücke.

Solche Laserbearbeitungsanlagen sind beispielsweise aus der JP 10-263874 A und der JP 08-132228 A bekannt und umfassen einen relativ zur Werkstückauflage bewegbaren Schneidkopf, um mit einem Laserstrahl ein weitgehend ruhendes Werkstück, das auf den Tragpunktspitzen der Auflageelemente aufliegt, zu bearbeiten. Während dem Bearbeiten kommt es beim Überfahren der Tragpunktspitzen durch den Laserstrahl zu Problemen, wie beispielsweise Beschädigungen der Tragpunktspitzen durch Aufschweißungen, Beschädigungen der Tragpunktspitzen durch Wegschmelzen und/oder einen ungleichmäßigen Schnitt zwischen dem Gutteil und Restteil, da die Schneidverhältnisse an den Tragpunktspitzen anders als an den benachbarten Tragpunktspitzen sind.

Aus der EP 1 731 256 A geht eine Werkstückauflage hervor, bei der die Auflageelemente durch einen Aktuator aus einer AbstützpositIon in eine Schutzposition absenkbar sind.

Um die vorgenannten Probleme bei der Bearbeitung der Werkstückauflage zu reduzieren, geht aus der DE 38 03 918 A1 eine Werkstückauflage hervor, bei der die Auflageelemente in Abhängigkeit der Position des Laserstrahls während der Bearbeitung versenkbar sind. Durch eine mit dem Schneidkopf gekoppelte Mechanik wird jeweils dasjenige Auflageelement versenkt, das bei der Bearbeitung im Auftreffbereich des Laserstrahles liegt.

Eine analoge Ausgestaltung ist ebenfalls durch die JP 59127988 A bekannt. Diese Auflageleisten werden über eine Kurvensteuerung angesteuert, wobei gleichzeitig eine Absenk- und Verschiebebewegung in Längsrichtung des Auflageelementes vorgesehen ist, das anschließend von dem Laserstrahl überfahren wird.

Bei beiden Ausführungsformen wird über die gesamte Länge der Auflageelemente ein Absenken der Tragpunktspitzen bewirkt. Diese Ausführungsformen weisen zwar den Vorteil auf, dass ein Aufschweißen der Tragpunktspitzen beim Überfahren während des Schneidvorganges verringert wird, jedoch kann es zu ungleichmäßigen Schnitten kommen, insbesondere dann, wenn ein Werkstück fast vollständig aus der Werkstücktafel ausgeschnitten ist und mit einem Ende an den abgesenkten Tragpunktspitzen aufliegt. Darüber hinaus sind solche mechanischen Ausgestaltungen aufwändig und störanfällig.

Der Erfindung liegt deshalb die Aufgabe zugrunde, ein Verfahren, eine Einstellvorrichtung sowie ein Auflageelement zum Einrichten einer Werkstückauflage vorzuschlagen, wodurch die Tragpunktspitzen derart zum Werkstück positionierbar sind, dass diese beim Schneiden mit einem Schneidstrahl nicht überfahren werden oder nur eine erheblich verringerte Anzahl überfahren wird, dass die bereits ausgeschnittenen Gutteile sicher unterstützt werden und dass eine sichere Entnahme der Gut- und Restteile ermöglicht ist.

Diese Aufgabe wird erfindungsgemäß durch ein Verfahren zur Einrichtung der Werkstückauflage gemäß den Merkmalen des Anspruchs 1 gelöst.

Durch das erfindungsgemäße Verfahren zum Einrichten einer Werkstückauflage zur Aufnahme eines insbesondere tafelförmigen Werkstücks in einer Bearbeitungsanlage, wie beispielsweise einer Laserbearbeitungsanlage, wird ermöglicht, dass die Standzeiten der Auflageelemente wesentlich erhöht werden. Darüber hinaus lassen sich die Nachteile und Probleme vermeiden, die sich beim Überfahren der Tragpunktspitzen mit einem Schneidstrahl während des Schneidprozesses ergeben. Die Beschädigungen der Gutteile durch Rückspritzer oder Reflexionen, die Beschädigungen der Tragpunktspitzen und/oder das Aufschweißen der Tragpunktspitzen sowie Automatisierungsprobleme durch Festbacken der Auflageelemente an den Gut- und Restteilen werden zumindest erheblich reduziert oder sogar verhindert.

Durch das erfindungsgemäße Verfahren wird jedes Auflageelement spezifisch an eine Schachtelung für die nachfolgende Bearbeitung des Werkstückes angepasst. Nach einem Einlesen der Schachtelung beziehungsweise Tafelbelegung wird seitens einer Steuerung ermittelt, welche Tragpunktspitzen sich auf der Schneidkontur befinden und deshalb in eine inaktive Position überzuführen sind, wobei gleichzeitig berücksichtigt wird, dass zumindest drei Tragpunktspitzen ein ausgeschnittenes Gutteil tragen, so dass eine stabile Auflage ohne Verkippen gegeben ist. Im Anschluss werden die Anschlagelemente der Einstellvorrichtung in eine Ruheposition oder eine erste Arbeitsposition für das nachfolgend zu überfahrende Auflageelement übergeführt. Die Anschlagelemente überfahren die Tragpunktspitzen in einer Ruheposition berührungsfrei. Diese Tragpunktspitzen bleiben bestehen und übernehmen die Tragefunktion und bilden ein Auflagefeld. Beim Überfahren des Auflageelementes mit Anschlagelementen in einer ersten Arbeitsposition werden einzelne Tragpunktspitzen durch die Anschlagelemente in eine inaktive Position übergeführt, so dass ein Aufschweißen der Tragpunktspitzen sowie ein Festbacken an den Gut- und/oder Restteilen verhindert wird. Eine mit neuen Auflageelementen bestückte Werkstückauflage wird somit vor dem Abarbeiten eines Auftrags auf die Schachtelung oder Tafelbelegung durch zumindest einmaliges Überfahren der Einstellvorrichtung angepasst. Dadurch kann ein hoher Automatisierungsgrad sowohl beim Einrichten der Werkstückauflage für den nachfolgenden Bearbeitungsvorgang als auch bei der Entnahme von Gut- und Restteilen erzielt werden.

Die inaktive Position der Tragpunktspitzen wird bevorzugt dadurch erzielt, dass die Tragpunktspitzen durch Umformen, Umkippen oder durch Abbrechen aus der Auflageebene des Werkstücks zumindest im Bereich der Schneidkontur entfernt werden. Dafür ist zumindest ein Anschlagelement vorgesehen, welches in einer ersten Arbeitsposition angeordnet ist.

Nach einer vorteilhaften Ausgestaltung des Verfahrens ist vorgesehen, dass die Werkstückauflage beim Einfahren in eine Bearbeitungsmaschine eingerichtet wird. Die Einstellvorrichtung ist bevorzugt am Eingang der Bearbeitungsmaschine fixiert. Somit kann die Werkstückauflage zunächst für einen Einrichtvorgang ohne Werkstück in die Bearbeitungsmaschine eingefahren werden und ist nach diesem Einstellvorgang für den nachfolgenden Prozess eingerichtet.

Nach einer alternativen Ausgestaltung des Verfahrens kann vorgesehen sein, dass die Werkstückauflage in der Bearbeitungsmaschine positioniert wird und im Anschluss daran die Einstellvorrichtung oberhalb der Werkstückauflage oder die Werkstückauflage zur Einstellvorrichtung verfahren wird oder eine Relativbewegung erfolgt. In Abhängigkeit der Größe der Bearbeitungsmaschine als auch deren Konfiguration können beide Lösungsmöglichkeiten vorgesehen sein. Eine weitere alternative Ausführungsform ist darin gegeben, dass in einer separaten Be- und Entladestation der Einrichtvorgang mittels der Einstellvorrichtung durchgeführt wird.

Nach einer vorteilhaften Ausgestaltung des Verfahrens ist vorgesehen, dass die Anschlagelemente zum Umbiegen der Tragpunktspitzen in eine erste Arbeitsposition und zum Abbrechen der Tragpunktspitzen in eine zweite, weiter ausgefahrene Arbeitsposition eingestellt werden. Dadurch können die Tragpunktspitzen mit einem Anschlagelement verschiedentlich eingerichtet werden. In Abhängigkeit der Einstellung einer Arbeitsposition können die Tragpunktspitzen in der inaktiven Position geringer oder stärker umgebogen werden.

Nach einer weiteren Ausgestaltung des Verfahren zum Einrichten der Werkstückauflage ist vorgesehen, dass das zumindest eine Anschlagelement zur Erzielung eines Biegewinkels während dem Überfahren der Tragpunktspitzen in der Höhe verfahrbar zum Trägerelement angesteuert wird. Dadurch kann sowohl die Höhe der Biegelinie als auch der Grad der Biegung eingestellt werden.

Nach einer weiteren vorteilhaften Ausgestaltung des Verfahrens ist vorgesehen, dass das zumindest eine Anschlagelement beim ersten Überfahren die zumindest eine Tragpunktspitze umformt und dass beim anschließenden gegenläufigen Überfahren die zumindest eine Tragpunktspitze in einem größeren Winkel als beim ersten Überfahren umgebogen wird.

Alternativ kann beim nachfolgenden wiederholten Überfahren die zumindest eine Tragpunktspitze in einem größeren Winkel als beim ersten Überfahren umgebogen und/oder zum Bruch geführt werden. Bei der ersten Alternative, die einen Wechsel in der Biegerichtung umfasst, kann der Bruch aufgrund der Materialermüdung durch einen zweifachen Biegeprozess eingeleitet werden. Die zweite Alternative kann bei sehr dickem Material vorgesehen sein, so dass eine stufenweise Überführung der Tragpunktspitzen in eine inaktive Position erfolgt, wobei beim zweiten Überfahren ein weiteres Umbiegen oder auch die Einleitung eines Bruches vorgesehen sein kann.

Die der Erfindung zugrunde liegende Aufgabe wird des Weiteren erfindungsgemäß durch die Einstellvorrichtung gemäß den Merkmalen des Anspruchs 8 gelöst. Eine solche Einstellvorrichtung weist einzeln ansteuerbare Anschlagelemente auf. Diese Anschlagelemente führen in Abhängigkeit der Schachtelung beziehungsweise Tafelbelegung die in der Schnittkontur liegenden Tragpunktspitzen in eine inaktive Position über. Durch die einzeln ansteuerbaren Anschlagelemente kann eine schnelle Einrichtung der nebeneinander liegenden Auflageelemente erzielt werden. Die Anschlagelemente der Einstellvorrichtung werden quer zur Längserstreckung der Auflageelemente und somit zu den Tragpunktspitzen bewegt, so dass für jedes Auflageelement eine individuelle Einstellung der Anschlagelemente an der Einstellvorrichtung zum Überfahren der Tragpunktspitzen und gegebenenfalls Überführen in die inaktive Position ermöglicht ist.

Die Anschlagelemente sind bevorzugt am Trägerelement der Einstellvorrichtung verschiebbar und im Abstand zueinander einstellbar. Dadurch können verschieden große oder breite Tragpunktspitzen an einem Auflageelement umgebogen oder abgebrochen werden. Gleichzeitig bleibt die Flexibilität der Einstellvorrichtung erhalten.

Die Einstellvorrichtung weist gemäß einer vorteilhaften Ausführungsform ein Trägerelement auf, das sich über die gesamte Breite einer Werkstückauflage erstreckt. Somit kann mit einem Trägerelement die gesamte Länge eines Auflageelementes bearbeitet und eingerichtet werden.

Die Auflageelemente der Einstellvorrichtung weisen gemäß einer bevorzugten Ausführungsform ein stiftförmiges Werkzeug auf, welches insbesonderte eine gerundete Polkappe umfasst. Dadurch ist ein einfaches Überfahren und Umbiegen beziehungsweise Abbrechen der Tragpunktspitzen ermöglicht. Die stiftförmigen Werkzeuge, insbesondere Bolzen, der Auflageelemente sind bevorzugt aus einem gehärteten Material hergestellt. Dadurch kann eine hohe Lebensdauer erzielt werden.

Die der Erfindung zugrunde liegende Aufgabe wird erfindungsgemäß durch ein Auflageelement gemäß den Merkmalen des Anspruchs 13 gelöst. Das Auflageelement weist Tragpunktspitzen auf, die durch eine Umformung oder einen Bruch in eine inaktive Position außerhalb des Wirkbereichs des Schneidstrahles zur Bearbeitung des Werkstückes anordenbar sind. Die Umformung kann insbesondere durch Umbiegen erfolgen, wobei in manchen Fällen bereits eine geringe Biegung genügen kann, um die Tragpunktspitze außerhalb der Schneidkontur zu positionieren.

Zum Umformen der Tragpunktspitzen ist vorgesehen, dass die Auflageelemente der Werkstückauflage im Übergangsbereich zwischen den Tragpunktspitzen und einer Auflageleiste eine Sollbiegelinie aufweisen. Dadurch können die Biegekräfte minimiert werden. Gleichzeitig kann ein definierter Bereich geschaffen werden, in welchem die Tragpunktspitzen sich gegenüber der Auflageleiste beim Umformen neigen. Eine solche Sollbiegelinie kann bevorzugt durch eine Minimierung der Materialstärke, wie beispielsweise einer Prägung oder durch einen Materialabtrag, erzielt werden.

Alternativ weisen die Auflageelemente zwischen den Tragpunktspitzen und der Auflageleiste zum Bruch der Tragpunktspitzen eine Sollbruchlinie aufweisen, so dass die Tragpunktspitzen nach einer ersten Umformphase brechen und entfernbar sind. Eine solche Sollbruchlinie kann durch eine Art Perforationslinie geschaffen sein, wobei die Dicke der verbleibenden Stege der Perforation die Bruchkräfte bestimmen. Des Weiteren kann alternativ auch entlang der Sollbruchlinie eine Wandstärkenminimierung durch einen Materialabtrag oder Prägung erzielt werden.

Die Erfindung sowie weitere vorteilhafte Ausführungsformen und Weiterbildungen derselben werden im Folgenden anhand der in den Zeichnungen dargestellten Beispiele näher beschrieben und erläutert.

Es zeigen:
- Figur 1: eine perspektivische Ansicht einer Bearbeitungsmaschine mit einer Einstellvorrichtung,
- Figur 2: eine schematisch vergrößerte Darstellung der Einstellvorrichtung vor und nach dem Einsatz an einem Auflageelement in einer Werkstückauflage und
- Figur 3: eine schematische Seitenansicht von einzelnen Auflageelementen.

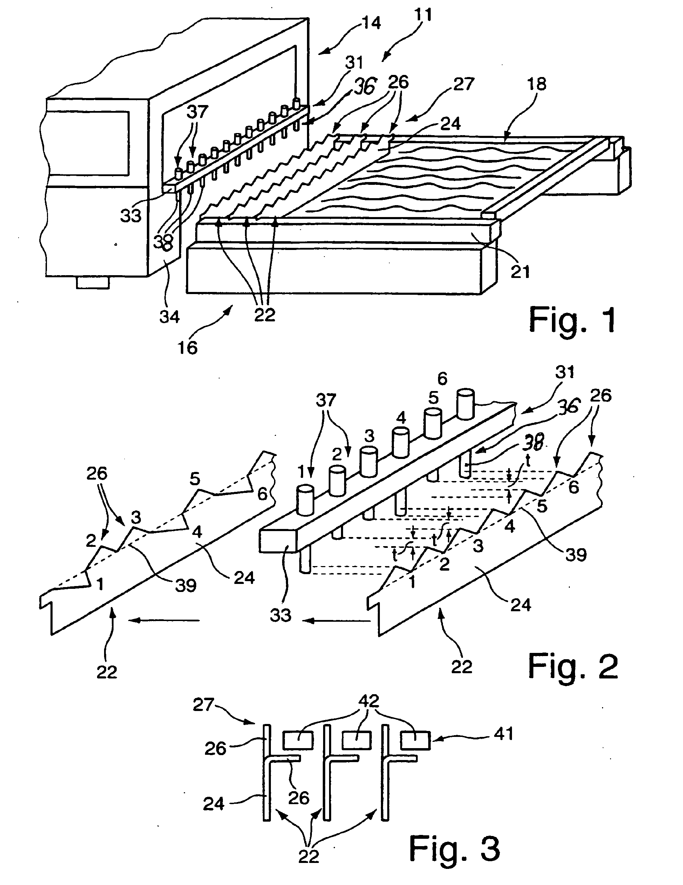

In Figur 1 ist ein Teil einer Bearbeitungsanlage 11, insbesondere einer Laserbearbeitungsanlage, dargestellt. Diese umfasst eine Laserbearbeitungsmaschine 14 sowie einen Be- und Entladebereich 16. In die Laserbearbeitungsmaschine 14 wird eine Werkstückauflage 18 eingefahren und zu einem Linearachsensystem positioniert. Über dieses Linearachsensystem wird ein Schneidkopf oberhalb eines auf der Werkstückauflage 18 aufliegenden Werkstückes verfahren, wodurch mit einem Schneidstahl, insbesondere einem Laserstrahl, eine Schneidkontur in das Werkstück eingebracht wird. In der Be- und Entladestation 16 wird die Werkstückauflage 18 mit einem plattenförmigen Werkstück bestückt, um dieses Werkstück zu bearbeiten. Nach dem Einbringen der Schneidkontur wird die Werkstückauflage 18 aus der Bearbeitungsmaschine 14 zum Be- und Entladen der Gut- und Restteile in die Be- und Entladestation 16 herausgeführt.

Die Werkstückauflage 18 weist einen insbesondere verfahrbaren Rahmen 21 auf, der eine Vielzahl von parallel nebeneinander liegenden Auflageelementen 22 trägt. Diese Auflageelemente 22 sind austauschbar an dem Rahmen 21 vorgesehen. Die Auflageelemente 22 umfassen eine durchgehende Auflageleiste 24, an der nach oben ausgerichtet Tragpunktspitzen 26 vorgesehen sind. In einer senkrecht nach oben stehenden Position dienen die Tragpunktspitzen 26 zur Auflage des Werkstücks und bilden ein Auflagefeld 27.

Im Übergangsbereich zwischen der Laserbearbeitungsmaschine 14 und dem Be- und Entladebereich 16 ist eine Einstellvorrichtung 31 vorgesehen. Diese Einstellvorrichtung 31 ist oberhalb eines durch die Tragpunktspitzen 26 gebildeten Auflagefeldes 27 für das Werkstück am Gehäuse 34 angeordnet. Die Einstellvorrichtung 31 umfasst ein Trägerelement 33, das sich bevorzugt über die gesamte Breite der Werkstückauflage 18 erstreckt und an dem Gehäuse 34 befestigt ist. Das Trägerelement 33 nimmt eine Vielzahl von Anschlagelementen 36 auf, die vorzugsweise ein stiftförmiges Werkzeug 38 aufweisen, welches nach unten ragt. Dieses Werkzeug 38 des Anschlagelementes 36 ist über einen Aktuator 37 in der Höhe einstellbar. Jedes einzelne Anschlagelement 36 ist über eine Steuerung, die mit der Steuerung der Laserbearbeitungsmaschine 14 gekoppelt ist, ansteuerbar. Durch diese Verknüpfung wird ermöglicht, dass in Abhängigkeit der Tafelbelegung die Werkstückauflage 18 eingerichtet wird. Die Einrichtung der Werkstückauflage 18 erfolgt dadurch, dass Tragpunktspitzen 26, die in der Schneidkontur der Tafelbelegung liegen, in eine inaktive Position übergeführt werden. Eine solche inaktive Position kann durch eine Umformung, insbesondere durch ein Umbiegen, der Tragpunktspitzen 26 erfolgen durch Umkippen einer Tragpunktspitze 26 oder durch ein Abbrechen der Tragpunktspitzen 26, so dass diese von dem Auflageelement 22 entfernt werden.

Zur individuellen Anpassung der Auflageelemente 22 an den nachfolgenden Bearbeitungsprozess für das Werkstück ist vorgesehen, dass die Anschlagelemente 36 zu den Tragpunktspitzen 26 ausgerichtet werden, das heißt, dass jede Tragpunktspitze 26 von einem Anschlagelement 36 bedarfsmäßig berührungsfrei überfahren oder in eine inaktive Position übergeführt wird. Hierzu wird beispielsweise die Werkstückauflage 18 in einen Bearbeitungsraum der Laserbearbeitungsmaschine 14 eingefahren. Ein solcher Ablauf ist beispielsweise in Figur 2 dargestellt. Das Auflageelement 22, bei welchem zunächst alle Tragpunktspitzen 26 in einer aktiven Position sind, wird vor der Einstellvorrichtung 31 positioniert. Die Anschlagelemente 36 werden in Abhängigkeit der Schneidkontur angesteuert. Beim Ausführungsbeispiel verläuft die Schneidkontur der Tafelbelegung für den nachfolgenden Bearbeitungsprozess dergestalt, dass die Tragpunktspitzen 27 mit den Positionsnummern 1, 4 und 6 von dem Schneidstrahl überfahren werden. Aufgrund dieses Umstandes werden die Anschlagelemente 36 mit den Positionsnummern 1, 4 und 6 in eine vorbestimmte Arbeitsposition übergeführt. Die weiteren Anschlagelemente 2, 3 und 5 werden in einer Ruheposition gehalten. Anschließend wird das Auflageelement 22 unterhalb des Trägerelementes 33 der Einstellvorrichtung 31 hindurchgeführt, und die Tragpunktspitzen 26 mit den Positionsnummern 1, 4 und 6 werden umgebogen. Folglich sind diese in eine inaktive Position übergeführt worden. Dieser Vorgang wiederholt sich für jedes Auflageelement 22 der Werkstückauflage 18 einzeln, bis die gesamte Werkstückauflage 18 unterhalb der Einstellvorrichtung 31 hindurchgeführt ist.

Die Auflageelemente 22 weisen bevorzugt eine Sollbiegelinie 39 auf. Dadurch kann die zumindest eine Tragpunktspitze 26 mit einer verringerten Kraft in eine inaktive Position übergeführt werden. Darüber hinaus kann ein definiertes Umbiegen erfolgen. Alternativ kann anstelle der Sollbiegelinie 39 eine Sollbruchlinie eingebracht werden, so dass die Tragpunktspitzen 26 gemäß den Positionsnummern 1, 4 und 6 abbrechen und vollständig entfernt werden können. -

Die Einstellvorrichtung 31 kann auch aktiv über eine stillstehende Werkstückauflage 18 geführt werden. Ebenso kann auch eine Relativbewegung zwischen Einstellvorrichtung 31 und Werkstückauflage 18 gegeben sein.

In Figur 3 ist eine schematische Seitenansicht von beispielsweise drei in dem Rahmen 21 der Werkstückauflage 18 angeordneten Auflageelementen 22 dargestellt. Einzelne Tragpunktspitzen 26 sind durch einen Biegeprozess in die inaktive Position übergeführt worden. Bevorzugt wurde eine Umbiegung um 90° erzielt. Diese Ausführungsform weist den Vorteil auf, dass ein einfaches Entladen der Gut- und/oder Restteile mittels eines Rechens 41 ermöglicht ist, dessen Zinken 42 in einem Zwischenraum zwischen dem Auflagefeld 27 und den ungebogenen Tragpunktspitzen 26 eingreifen kann.

Bei der Ansteuerung der Anschlagelemente 36 zum Einrichten der Auflageelemente 22 kann des Weiteren vorgesehen sein, dass beispielsweise zwei oder drei Tafelbelegungen gleichzeitig berücksichtigt werden, so dass nur ein Einrichtvorgang erforderlich ist.

Die Werkstückauflage 18 mit deren Auflageelementen 22 kann auch der Gestalt eingerichtet werden, dass einzelne Tragpunktspitzen 26 in einer aktiven Position verbleiben und die Gutteile tragen. Ein weiterer Teil der Tragpunktspitzen 26 wird gegenüber denen, die das Gutteil tragen umgebogen, so dass diese geringfügig eine Auflageebene für Restteile bilden, die geringfügig unterhalb dem Auflagefeld für die Gutteile liegen. Ein weiterer Teil der Tragpunktspitzen 26 kann in eine inaktive Position übergeführt werden, so dass diese Tragpunktspitzen 26 außerhalb der Schneidkontur liegen bzw. ein Aufschmelzen der Tragpunktspitzen 26 oder eine Beschädigung durch Strahlreflexionen oder Rückspritzer an der Unterseite des bearbeiteten Werkstückes vermieden werden. Ebenso können diese Tragpunktspitzen 26 abgebrochen werden, so dass diese inaktiv sind.

Des Weiteren kann alternativ vorgesehen sein, dass das Anschlagelement 36 ein Werkzeug 38 aufnimmt und in der Höhe verfahrbar ansteuert, welches gleichzeitig an zwei benachbarten Tragpunktspitzen 26 angreifen kann.

Die Tragpunktspitzen 26 können alternativ auch über eine welche Biegelinie und einen kleinen Blegewinkel außerhalb der Schneidkontur positioniert werden. Dadurch kann ermöglicht sein, dass eine Wiederverwendung der Auflageelemente 22 für eine weitere Schachtelung oder Tafelbelegung eines Werkstückes ermöglicht ist. Die Anschlagelemente 36 der Einstellvorrichtung 31 können an der Tragpunktspitze 26 mit weicher Biegelinie angreifen und diese wieder aufrichten und beispielsweise die benachbarte Tragpunktspitze 26 in eine inaktive Position überführen.

## Patentansprüche

1. Verfahren zum Einrichten einer Werkstückauflage (18) zur Auflage eines insbesondere tafelförmigen Werkstücks in einer Bearbeitungsanlage (11), in der das Werkstück mit einem Schneidstrahl, vorzugsweise Laserstrahl, bearbeitet wird, wobei die Werkstückauflage (18) in einem Rahmen (21) mehrere nebeneinander liegende Auflageelemente (22) aufnimmt, welche Tragpunktspitzen (26) aufweisen und ein Auflagefeld (27) für das Werkstück bilden, **dadurch gekennzeichnet,**
- **dass** die Werkstückauflage (18) zum Einrichten der Auflageelemente (22) unbeladen einer Einstellvorrichtung (31) zugeführt wird, die eine Vielzahl von einzeln ansteuerbaren Anschlagelementen (36) aufweist, die in der Höhe relativ zu den Tragpunktspitzen der Auflageelemente (22) einstellbar sind,
- **dass** vor dem Überfahren eines Auflageelementes (22) jedes Anschlagelement (36) in einer Ruheposition oder in einer ersten Arbeitsposition positioniert wird,
- wobei beim Überfahren eines Auflageelementes (22) diejenigen Anschlagelemente (36), die in einer Ruheposition positioniert sind, die dem jeweiligen Anschlagelement (36) zugeordnete Tragpunktspitze (26) berührungsfrei überfahren und
- diejenigen Anschlagelemente (36), die in einer ersten Arbeitsposition positioniert sind, die dem jeweiligen Anschlagelement (36) zugeordnete Tragpunktspitze (26) in eine inaktive Position überführen.

2. Verfahren nach Anspruch 1, **dadurch gekennzeichnet, dass** beim Überfahren des Auflageelementes (22) mit dem Anschlagelement (36) in einer ersten Arbeitsposition die Tragpunktspitze (26) durch Umformen, Umkippen oder durch Abbrechen in eine inaktive Position übergeführt wird.

3. Verfahren nach Anspruch 1, **dadurch gekennzeichnet, dass** die Werkstückauflage (18) beim Einfahren in eine Bearbeitungsmaschine eingerichtet wird.

4. Verfahren nach Anspruch 1, **dadurch gekennzeichnet, dass** nach dem Positionieren der Werkstückauflage (18) in einer Bearbeitungsmaschine (14) oder in einer Be- und Entladestation die Einstellvorrichtung (31) oberhalb der Werkstückauflage (18) verfahren wird.

5. Verfahren nach einem der vorhergehenden Ansprüche, **dadurch gekennzeichnet, dass** die Anschlagelemente (36) in der ersten Arbeits-position zum Umbiegen der Tragpunktspitzen (26) eingestellt und zum Abbrechen der Tragpunktspitzen (26) in eine weiter ausgefahrene, zweite Arbeitsposition eingestellt werden.

6. Verfahren nach einem der vorhergehenden Ansprüche, **dadurch gekennzeichnet, dass** das Anschlagelement (36) zur Erzielung eines Biegewinkels während dem Überfahren der Tragpunktspitzen (26) in der Höhe relativ zur Tragpunktspitze (26) verfahren wird.

7. Verfahren nach einem der vorhergehenden Ansprüche, **dadurch gekennzeichnet, dass** das Anschlagelement (36) beim erstmaligen Überfahren die Tragpunktspitze (26) umformt und beim nachfolgenden gegenläufigen Überfahren die Tragpunktspitze (26) in einem größeren Winkel als beim ersten Überfahren umgebogen oder beim nachfolgenden gleichsinnigen Überfahren die vorgebogene Tragpunktspitze (26) mit einem größeren Winkel als beim ersten Überfahren umgebogen und/oder zum Bruch geführt wird.

8. Einstellvorrichtung zum Einrichten einer Werkstückauflage (18), die insbesondere ein plattenförmiges Werkstück aufnimmt, das in einer Bearbeitungsmaschine (14) mit einem Schneidstrahl, insbesondere Laserstrahl, bearbeitet wird, **dadurch gekennzeichnet, dass** an einem Trägerelement (33) eine Vielzahl von nebeneinander angeordneten Anschlagelementen (36) vorgesehen sind, die einzeln in einer Ruheposition oder in einer Arbeitsposition anordenbar sind.

9. Einstellvorrichtung nach Anspruch 8, **dadurch gekennzeichnet, dass** die Anschlagelemente (36) im Abstand zueinander entlang des Trägerelementes (33) einstellbar sind.

10. Einstellvorrichtung nach Anspruch 8 oder 9, **dadurch gekennzeichnet, dass** das Trägerelement (33) sich über die gesamte Breite eines Auflageelementes (22) der Werkstückauflage (18) erstreckt.

11. Einstellvorrichtung nach einem der Ansprüche 8 bis 10, **dadurch gekennzeichnet, dass** das Anschlagelement (36) ein stiftförmiges Werkzeug (38) aufweist und vorzugsweise gerundete Polkappen umfasst.

12. Einstellvorrichtung nach einem der Ansprüche 8 bis 11, **dadurch gekennzeichnet, dass** die stiftförmigen Werkzeuge (38) der Anschlagelemente (36) aus einem gehärteten Material hergestellt sind.

13. Auflageelement für eine Werkstückauflage (18) zur Aufnahme eines insbesondere tafelförmigen Werkstücks in einer Bearbeitungsanlage (11), die das Werkstück mit einem Schneidstrahl, vorzugsweise Laserstrahl, bearbeitet, wobei das Auflageelement (22) in einem Rahmen (21) der Werkstückauflage (18) anordenbar ist und Tragpunktspitzen (26) aufweist, **dadurch gekennzeichnet, dass** die Tragpunktspitzen (26) im Übergangsbereich zur Auflageleiste (24) eine Sollbiegelinie (39) aufweisen und durch eine Umformung in eine inaktive Position zum Schneidstrahl zur Bearbeitung des Werkstücks anordenbar sind oder die Tragpunktspitzen (26) im Übergangsbereich zur Auflageleiste (24) eine Sollbruchlinie aufweisen und durch einen Bruch in eine inaktive Position zum Schneidstrahl zur Bearbeitung des Werkstücks anordenbar sind.

14. Auflageelement nach Anspruch 13, **dadurch gekennzeichnet, dass** die Tragpunktspitzen (26) nach einer Umformphase brechen und entfernbar sind.

## Claims

1. A method for setting up a workpiece support (18) for supporting a workpiece, in particular of slab-like shape, in a machining unit (11) wherein the workpiece is machined using a cutting beam, preferably a laser beam, said workpiece support (18) receiving in a frame (21) a plurality of support elements (22) disposed side by side and provided with pointed carrier tips (26) forming a support zone (27) for the workpiece, **characterised in that**
- for setting up the support elements (22), the unloaded workpiece support (18) is fed to the adjusting device (31) which has a plurality of individually activatable abutment elements (36) that are adjustable in height relative to the pointed carrier tips of the support elements (22),
- before passing over a support element (22), each abutment element (36) is positioned in a starting position or in a first working position,
- wherein when passing over a support element (22) those abutment elements (36) which are positioned in a starting position will move over the respective pointed carrier tip (26) associated with the corresponding abutment element (36) without touching it, and
- those abutment elements (36) which are positioned in a first working position will transfer the respective pointed carrier tip (26) associated with the corresponding abutment element (36) to an inactive position.

2. The method as claimed in claim 1, **characterised in that** when passing over the support element (22) with the abutment element (36) in a first working position, the pointed carrier tip (26) is transferred to an inactive position by way of deformation, tilting, or breaking.

3. The method as claimed in claim 1, **characterised in that** the workpiece support (18) is set up during its insertion into a processing machine.

4. The method as claimed in claim 1, **characterised in that** once the workpiece support (18) has been positioned in a processing machine (14) or in a loading and unloading station, the adjusting device (31) is displaced over the workpiece support (18).

5. The method as claimed in any one of the preceding claims, **characterised in that** the abutment elements (36) are adjusted for bending the pointed carrier tips (26) when in a first working position and for breaking off the pointed carrier tips (26) when in a second, farther extended working position.

6. The method as claimed in any one of the preceding claims, **characterised in that** for obtaining a bending angle during passage over the pointed carrier tips (26), the abutment element (36) is displaced in height relative to the respective pointed carrier tip (26).

7. The method as claimed in any one of the preceding claims, **characterised in that** upon its first passage, the abutment element (36) deforms the carrier tip (26) and, upon the subsequent passage in the opposite direction, the pointed carrier tip (26) is bent over in a greater angle than during the first passage, or **in that** upon the subsequent passage in the same direction, the pre-bent, pointed carrier tip (26) is bent in a greater angle than during the first passage and/or is broken off.

8. An adjusting device for setting up a workpiece support (18) which receives in particular a platelike workpiece that is to be processed in a processing machine (14) using a cutting beam, in particular a laser beam, **characterised in that** a carrier member (33) is provided with a plurality of abutment elements (36) disposed side by side which are arrangeable individually in a starting position or in a working position.

9. The adjusting device as claimed claim 8, **characterised in that** the abutment elements (36) are adjustable as to their distance from one another along the carrier member (33).

10. The adjusting device as claimed in claim 8 or 9, **characterised in that** the carrier member (33) extends over the entire width of a support element (22) of the workpiece support (18).

11. The adjusting device as claimed in any one of claims 8 to 10, **characterised in that** the abutment element (36) has a pin-shaped tool (38) and preferably comprises rounded terminal caps.

12. The adjusting device as claimed in any one of claims 8 to 11, **characterised in that** the pin-shaped tools (38) of the abutment elements (36) are made from a hardened material.

13. A support element for a workpiece support (18) for receiving a workpiece, in particular of slab-like shape, in a machining unit (11) which processes said workpiece using a cutting beam, in particular a laser beam, said support element (22) being arrangeable within a frame (21) of the workpiece support (18) and having pointed carrier tips (26), **characterised in that** the pointed carrier tips (26) have a predetermined bending line (39) formed in the transition zone leading to the support bar (24) and are arrangeable, by a deforming process, in an inactive position with respect to the cutting beam for the processing of the workpiece, or **in that** the pointed carrier tips (26) have a predetermined breaking line formed in the transition zone leading to the support bar (24) and are arrangeable, by a breaking process, in an inactive position with respect to the cutting beam for the processing of the workpiece.

14. The support element as claimed in claim 13, **characterised in that** after undergoing a phase of deformation, the pointed carrier tips (26) will break and may then be removed.

## Revendications

1. Procédé permettant de régler un porte-pièce (18) servant de support à une pièce à usiner, notamment en forme de plaque, dans une unité d'usinage (11), dans laquelle la pièce à usiner est usinée au moyen d'un jet de coupe, de préférence d'un rayon laser, le porte-pièce (18) recevant dans un cadre (21) plusieurs éléments d'appui (22) disposés côte à côte, lesquels présentent des pointes de support (26) et forment une zone d'appui (27) pour la pièce à usiner, **caractérisé en ce que**
- pour le réglage des éléments d'appui (22), le porte-pièce (18) est amené, non chargé, à un dispositif de réglage (31) qui présente une pluralité d'éléments de butée (36), lesquels sont activables individuellement et réglables en hauteur par rapport aux pointes de support des éléments d'appui (22),
- avant de passer au-dessus d'un élément d'appui (22), chaque élément de butée (36) est mis dans une position de repos ou dans une première position de travail,
- lors du passage au-dessus d'un élément d'appui (22), les éléments de butée (36) positionnés dans une position de repos passant au-dessus de la, pointe de support (26) attribuée respectivement à l'élément de butée (36) correspondant sans le toucher, et
- les éléments de butée (36) positionnés dans une première position de travail faisant passer dans une position inactive la pointe de support (26) attribuée respectivement à l'élément de butée (26) correspondant.

2. Procédé selon la revendication 1, **caractérisé en ce que**, lorsque l'élément de butée (36) passe, dans une première position de travail, au-dessus de l'élément d'appui (22), la pointe de support (26) correspondante est mise dans une position inactive, et ce par déformation, basculement ou par rupture.

3. Procédé selon la revendication 1, **caractérisé en ce que** le porte-pièce (18) est réglé lors de son entrée dans une machine d'usinage.

4. Procédé selon la revendication 1, **caractérisé en ce que**, après le positionnement du porte-pièce (18) dans une machine d'usinage (14) ou dans une station de chargement et de déchargement, le dispositif de réglage (31) est déplacé au-dessus du porte-pièce (18).

5. Procédé selon l'une des revendications précédentes, **caractérisé en ce que**, dans la première position de travail, les éléments de butée (36) sont réglés de manière à plier les pointes de support (26), et en vue de rompre les pointes de support (26), sont réglés dans une deuxième position de travail, dans laquelle ils sont sortis d'avantage.

6. Procédé selon l'une des revendications précédentes, **caractérisé en ce que** l'élément de butée (36) est déplacé en hauteur par rapport à la pointe de support (26) afin d'obtenir un angle de pliage donné lors de son passage au-dessus des pointes de support (26).

7. Procédé selon l'une des revendications précédentes, **caractérisé en ce que**, lors du premier passage, l'élément de butée (36) déforme la pointe de support (26), et que, lors du passage suivant en sens inverse, la pointe de support (26) est pliée dans un angle plus grand que lors du premier passage, ou que, lors du passage suivant dans le même sens, la pointe de support (26) préalablement pliée est pliée avec un angle plus grand que lors du premier passage et/ou est rompue.

8. Dispositif de réglage permettant de régler un porte-pièce (18), lequel reçoit notamment une pièce à usiner en forme de plaque qui est usinée dans une machine d'usinage (14) au moyen d'un jet de coupe, notamment d'un rayon laser, **caractérisé en ce qu'**il est prévu, sur un élément porteur (33), une pluralité d'éléments de butée (36) disposés côte à côte, lesquels peuvent être mis, de manière individuelle, dans une position de repos ou dans une position de travail.

9. Dispositif de réglage selon la revendication 8, **caractérisé en ce que** les éléments de butée (36) sont réglables, quant à la distance qui les sépare les uns des autres, le long de l'élément porteur (33).

10. Dispositif de réglage selon la revendication 8 ou 9, **caractérisé en ce que** l'élément porteur (33) s'étend sur toute la largeur d'un élément d'appui (22) du porte-pièce (18).

11. Dispositif de réglage selon l'une des revendications 8 à 10, **caractérisé en ce que** l'élément de butée (36) présente un outil (38) en forme de broche et comprend de préférence des capuchons terminaux arrondis.

12. Dispositif de réglage selon l'une des revendications 8 à 11, **caractérisé en ce que** les outils (38) en forme de broche des éléments de butée (36) sont fabriqués en un matériau trempé.

13. Elément d'appui pour un porte-pièce (18) permettant de recevoir une pièce à usiner, notamment en forme de plaque, dans une unité d'usinage (11), laquelle usine la pièce à usiner au moyen d'un jet de coupe, de préférence d'un rayon laser, l'élément d'appui (22) pouvant être disposé dans un cadre (21) du porte-pièce (18) et présentant des pointes de support (26), **caractérisé en ce que** les pointes de support (26) présentent dans la zone de transition avec la baguette d'appui (24) une ligne de flexion prédéterminée et peuvent être mises, par déformation, dans une position inactive par rapport au jet de coupe permettant l'usinage de la pièce à usiner, ou **en ce que** les pointes de support (26) présentent dans la zone de transition avec la baguette d'appui (24), une ligne de rupture prédéterminée et peuvent être mises, par rupture, dans une position inactive par rapport au jet de coupe permettant l'usinage de la pièce à usiner.

14. Elément d'appui selon la revendication 13, **caractérisé en ce que**, après une phase de déformation, les pointes de support (26) cassent et peuvent être éliminées.
